# EUROPÄISCHE PATENTSCHRIFT

(11) **EP 3 202 970 B1**
(45) Veröffentlichungstag und Bekanntmachung des Hinweises auf die Patenterteilung: **02.02.2022**
(21) Anmeldenummer: 16002702.5
(22) Anmeldetag: 20.12.2016
(51) Int. Cl.: D06F 55/02

(54) **KLAMMER FÜR WÄSCHESTÜCKE UND VERFAHREN ZUM EINHÄNGEN VON WÄSCHESTÜCKEN IN EINE KLAMMER**
CLIP FOR CLOTHES AND METHOD OF HANGING LAUNDRY ITEMS IN A CLIP
ÉPINGLE À LINGE ET PROCÉDÉ DE SUSPENSION DE LINGE À UNE ÉPINGLE

(30) Priorität: 05.02.2016 DE 102016001298
(43) Veröffentlichungstag der Anmeldung: 09.08.2017
(60) Teilanmeldung: 19204095.4
(73) Patentinhaber: Herbert Kannegiesser GmbH, 32602 Vlotho (DE)
(72) Erfinder: HEINZ, Engelbert, 32602 Vlotho (DE); BRINGEWATT, Wilhelm, 32457 Porta Westfalica (DE)
(74) Vertreter: Möller, Friedrich

(56) Entgegenhaltungen:
- EP-A1- 0 902 118
- EP-A1- 2 942 432
- CN-A- 104 180 175
- DE-A1- 3 228 643
- DE-U1- 8 813 421
- JP-A- 2002 211 523
- KR-A- 20110 051 486

## Beschreibung

Die Erfindung betrifft ein Verfahren zum Einhängen von Wäschestücken in eine Klammer gemäß dem Oberbegriff des Anspruchs 1.

In Wäschereien werden Wäschestücke von Bedienungspersonen in Klammern von Wäschereimaschinen und Transportsystemen zum Transport von Wäschestücken zu Wäschereimaschinen eingegeben.

Die Kammern verfügen über einseitig offene Klammermäuler, in die Abschnitte, beispielsweise Ecken bzw. Eckbereiche, der Wäschestücke von den Bedienungspersonen zielgerichtet eingeschoben werden müssen. In manchen Fällen müssen von der Bedienungsperson gegenüberliegende Eckbereiche einer Kante der Wäschestücke in aufeinanderfolgende Klammern eingehängt werden. Dabei müssen die Eckbereiche in einer vorgegebenen, meist unterschiedlichen Orientierung oder Ausrichtung in die aufeinanderfolgenden Klammern eingehängt werden. Manche Wäschereimaschinen, insbesondere Eingabemaschinen, verfügen über mehrere Klammern, wobei die Bedienungspersonen gegenüberliegende Eckbereiche des jeweiligen Wäschestücks abwechselnd in ein bestimmtes Klammerpaar einhängen müssen. In der Praxis hat sich gezeigt, dass es den Bedienungspersonen Probleme bereitet, die genannten Anforderungen beim Einhängen der Wäschestücke in die Klammern zu erfüllen.

Aus der DE 88 13 421 U1 ist eine Vorrichtung zum Zuführen von Wäschestücken zu einer Mangel bekannt, bei der benachbarte Ecken einer vorderen Kante eines jeweiligen Wäschestücks manuell in zwei zusammen- und auseinanderfahrbare Spreizklammern eingehängt werden. Zwischen den Spreizklammern ist eine mittlere Klammer vorgesehen, von der die Mitte des vorderen Rands des Wäschestücks beim anfänglichen Ausstrecken desselben automatisch erfasst wird. Dieser Vorgang wird durch eine der mittleren Klammer zugeordnete Lichtschranke überwacht.

Aus der EP 0 902 118 A1 ist ein Finishing-System für Bekleidungsstücke bekannt, das an einem umlaufenden Schienensystem verfahrbare Träger für jeweils ein Bekleidungsstück aufweist. Jeder Träger verfügt über zwei gegensinnig verfahrbare Tragarmen. Durch Auseinanderfahren der Tragarme spannen sie den Bund des Bekleidungsstücks, wodurch dieses am jeweiligen Träger gehalten wird. Einer Inspektionseinrichtung des Finishing-Systems sind mehrere Leuchten zugeordnet, die dazu dienen sollen, das Bekleidungsstück in der Inspektionsstation zu illuminieren.

Die JP 2002-211523 A offenbart ein Verfahren und eine Vorrichtung zum Zuführen von Wäschestücken zu einer Faltvorrichtung. Hier ist ein Vereinzeler vorgesehen, der eine auf- und abbewegbare Klammer aufweist, die ein Wäschestück aus einem Wäschehaufen ergreift und dieses aus dem Wäschehaufen herauszieht. Die Klammer weist eine Lichtschranke auf. Diese detektiert den Eintritt eines Teils des Wäschestücks in die geöffnete mittige Klammer.

Der Erfindung liegt die Aufgabe zugrunde, ein Verfahren zu schaffen, das es der Bedienungsperson ermöglicht, Wäschestücke einfach und richtig in die Klammern einzuhängen.

Ein Verfahren zur Lösung der eingangs genannten Aufgabe weist die Maßnahmen des Anspruchs 1 auf. Demnach wird durch mindestens ein Leuchtmittel der oder jeder Bedienungsperson eine Orientierung für das Eingeben des betreffenden Wäschestücks in die Klammer vorgegeben. Das mindestens eine Leuchtmittel dient dadurch als visuelle Orientierungshilfe. Eine solche visuelle Orientierungshilfe ist vor allem in Wäschereien mit einem hohen Geräuschpegel und auch wenn wegen des hohen Geräuschpegels die jeweilige Bedienungsperson einen Lärmschutz trägt, hilfreich.

Es ist vorgesehen, dass der Klammer wenigstens ein Leuchtmittel indirekt, das heißt in der Nähe der Klammer, zugeordnet ist. Zumindest erhellt das mindestens eine Leuchtmittel die Klammer und gibt dadurch der jeweiligen Bedienungsperson eine das Eingeben des jeweiligen Wäschestücks in die Klammer erleichternde Orientierung und/oder das jeweilige Leuchtmittel gibt der Bedienungsperson eine andersgeartete Orientierungshilfe.

Bei einer besonders vorteilhaften Ausgestaltungsmöglichkeit des Verfahrens ist es vorgesehen, dass das jeweilige Leuchtmittel der jeweiligen Bedienungsperson in mehrfacher Hinsicht eine Orientierung gibt, und zwar nicht nur die jeweilige Klammer, insbesondere das dieser zugeordnete Klammermaul, erhellt, sondern der Bedienungsperson zusätzlich oder auch nur alternativ visuelle Informationen vermittelt. Je nach Anzahl der Leuchtmittel, der Lichtfarbe, der Modulation bzw. Taktung, der Anzahl der Leuchtmittel pro Klammer, die Art des Lichtstrahls, die Richtung des Lichtstrahls und/oder der Bewegung des mindestens einen Lichtstrahls, können der jeweiligen Bedienungsperson eine oder vorzugsweise gleich mehrere visuelle Information gegeben werden, wodurch die jeweilige Bedienungsperson mindestens eine Orientierung, insbesondere Orientierungshilfe, erhält. Das vereinfacht das Beschicken der jeweiligen Klammer mit einem Wäschestück, insbesondere einem Abschnitt desselben. Außerdem kann zusätzlich die Eingabeleistung erhöht werden. Schließlich können falsche Eingaben des Wäschestücks, beispielsweise durch in falscher Richtung erfolgendes Einhängen derselben in die Klammer, zuverlässig vermieden werden.

Bei einer bevorzugten Ausbildung des Verfahrens ist es vorgesehen, von mindestens einem Leuchtmittel das Klammermaul zu erhellen bzw. zu beleuchten und zusätzlich der jeweiligen Bedienungsperson anzuzeigen, in welche Klammer das jeweilige Wäschestück einzugeben ist und/oder welche Orientierung das jeweilige Wäschestück bzw. ein Abschnitt desselben in die Klammer, vorzugsweise das Klammermaul derselben, einzugeben ist und/oder in welcher Richtung das Wäschestück oder der Abschnitt derselben in das Klammermaul der Klammer eingeschoben werden muss. Hierdurch werden Fehlbedienungen durch falsches Eingeben des Wäschestücks, beispielsweise falsche Orientierung des in das Klammermaul einzugebenden Abschnitts des Wäschestücks, zuverlässig vermieden.

Vorzugsweise dient das mindestens eine Leuchtmittel nur oder unter anderem dazu, ein Klammermaul zu beleuchten und/oder anzuleuchten. Dadurch wird der Bedienungsperson vom Licht des Leuchtmittels das Einschieben des Wäschestücks, vorzugsweise eines Abschnitts desselben wie zum Beispiel einen Eckbereich, erleichtert, indem das vom Leuchtmittel erzeugte Licht der Bedienungsperson einen Pfad zum Einschieben des betreffenden Abschnitts des Wäschestücks in das Klammermaul der jeweiligen Klammer weist.

Gemäß einer bevorzugten Ausgestaltung dient das mindestens eine Leuchtmittel derselben dazu oder nicht nur dazu, die Klammer bzw. das Klammermaul zu erhellen bzw. zu beleuchten; vielmehr erfüllt das mindestens eine Leuchtmittel wenigstens eine weitere Zusatzfunktion oder eine andere Funktion. Beispielsweise kann vom mindestens einen Leuchtmittel angezeigt werden, in welcher Orientierung bzw. in welcher Richtung das Wäschestück, insbesondere ein Eckbereich desselben, von der Bedienungsperson in die jeweilige Klammer eingegeben werden muss und/oder in welche von mehreren Klammern das Wäschestück, insbesondere ein Abschnitt desselben, als nächstes einzugeben ist. Dadurch werden Fehler bei der Eingabe zuverlässig vermieden.

Eine andere Ausgestaltungsmöglichkeit sieht es vor, dass das mindestens eine Leuchtmittel ein getaktetes oder ungetaktetes Licht erzeugt. Getaktete Leuchtmittel erzeugen ein periodisch unterbrochenes Licht, wobei das Lichtmuster zwischen Hell- und Dunkelphasen beliebig sein kann. Ein ungetaktetes Leuchtmittel erzeugt hingegen ein kontinuierliches, ununterbrochenes Licht während der gesamten Dauer, in der es gebraucht wird.

Das jeweilige Leuchtmittel erzeugt bevorzugt einen Lichtstrahl, beispielsweise einen gebündelten Lichtstrahl, der über seine Länge einen etwa gleichen Querschnitt aufweist oder einen fokussierten Lichtstrahl. Wenn die Leuchtmittel nur zur Beleuchtung der Klammern dienen sollen, handelt es sich bei den Lichtstrahlen vorzugsweise um diffuse Lichtstrahlen bzw. Lichtkegel. Es ist auch denkbar, dass unterschiedliche Leuchtmittel voneinander abweichende Lichtstrahlen erzeugen, beispielsweise gebündelte Lichtstrahlen einerseits oder Lichtkegel andererseits.

Es ist insbesondere auch möglich, die Leuchtmittel so der jeweiligen Klammer indirekt zuzuordnen, dass ihre Lichtstrahlen, insbesondere gebündelten oder fokussierten Lichtstrahlen, eine gezielte Richtung aufweisen. Dadurch kann der Bedienungsperson beispielsweise die Einschubrichtung des Wäschestücks in die Klammer visuell angegeben werden, wodurch der Bedienungsperson eine von gegebenenfalls mehreren Orientierungen zur Erleichterung des Eingebens bzw. richtigen Eingebens des Wäschestücks in die jeweilige Klammer zur Verfügung gestellt wird.

Besonders vorteilhaft ist es, dass das mindestens eine Leuchtmittel der Klammer so zugeordnet ist, dass das von diesem erzeugte Licht, und zwar die Richtung des Lichts, gegebenenfalls die Taktung des Lichts und/oder die Farbe oder Helligkeit des Lichts von der jeweiligen Bedienungsperson wahrnehmbar ist. Dadurch kann die jeweilige Bedienungsperson die Richtung oder eine sonstige aus der Ausgestaltung des Lichts hervorgehende Information wahrnehmen und zur Orientierung verwenden. Beispielsweise kann das wenigstens eine Leuchtmittel derart der Klammer, insbesondere dem Klammerkörper, direkt zugeordnet sein, dass es das Klammermaul, vorzugsweise ein offenes Ende desselben und/oder die Richtung desselben, markiert und/oder erhellt. Das erleichtert der Bedienungsperson das Eingeben des jeweiligen Wäschestücks in die betreffende Klammer.

Gemäß einer vorteilhaften Weiterbildungsmöglichkeit der Erfindung ist es vorgesehen, der jeweiligen Klammer indirekt mehrere Leuchtmittel zuzuordnen. In dem Fall können nur ausgesuchte Leuchtmittel aktiviert werden und dadurch nur ein oder einige Leuchtmittel Licht erzeugen. Dadurch erhält die jeweilige Bedienungsperson eine gegebenenfalls weitere Arretierungshilfe, insbesondere eine Anweisung. Beispielsweise kann der Bedienungsperson so visuell dargestellt werden, in welcher Richtung oder wo sie das Wäschestück in die Klammer, insbesondere das Klammermaul, einzuschieben hat.

Eine vorteilhafte Weiterbildung sieht es vor, dass vom wenigstens einen Leuchtmittel bewegte Lichtstrahlen und/oder Lichtstrahlen wechselnder Richtungen erzeugbar sind. Die Lichtstrahlen können dann für die Bedienungsperson weg- oder richtungsweisend sein. Dadurch erhält die Bedienungsperson eine Orientierungshilfe beim Zuführen des Wäschestücks zur Klammer und beim Eingeben in dieselbe. Besonders vorteilhaft ist es bei mehreren der Klammer zugeordneten Leuchtmitteln, wenn diese bewegte Lichtstrahlen und/oder Lichtstrahlen wechselnder Richtungen erzeugen. Die Lichtstrahlen können dann insbesondere in ihrer Kombination nach Art eines Pfeils wirken oder insbesondere dann, wenn die mehreren Lichtstrahlen bewegt werden, einen Lichtweg oder Pfad vorzeigen bzw. angeben, der der jeweiligen Bedienungsperson nicht nur eine Richtung, sondern alternativ oder zusätzlich einen Weg vorgibt und dadurch die Lichtquellen nicht nur Licht erzeugen, sondern auch der Bedienungsperson anschaulich eine gegebenenfalls zusätzliche, visualisierte Arbeitsanweisung geben.

Besonders vorteilhaft ist es, wenn das Leuchtmittel von einer Leuchtdiode (LED) oder einem Array von Leuchtdioden gebildet ist. Eine andere vorteilhafte Ausgestaltungsform des Leuchtmittels besteht in der Bildung des Leuchtmittels aus einem Laserstrahl mit einem für das menschliche Auge unschädlichen Licht- und/oder Energiedichte. Vor allem ein als Laser ausgebildetes Leuchtmittel erzeugt einen langen und auf die gesamte Länge gebündelten, insbesondere einen konstanten Querschnitt aufweisenden, deutlich sichtbaren Laserstrahl. Darüber hinaus eignen sich aber auch andere handelsübliche Leuchtmittel zur Realisierung der Erfindung.

Ein bevorzugtes Ausführungsbeispiel der Erfindung wird nachfolgend anhand der Zeichnung näher erläutert. In dieser zeigen:
- Fig. 1: eine schematische Seitenansicht einer Eingabemaschine mit einem davor angeordneten Transportsystem,
- Fig. 2: eine Einzelheit II des Transportsystems der Fig. 1, und
- Fig. 3: einen Schnitt III-III durch ein unteres Ende einer Beladestelle des Transport-systems der Fig. 2 in vergrößertem Maßstab.

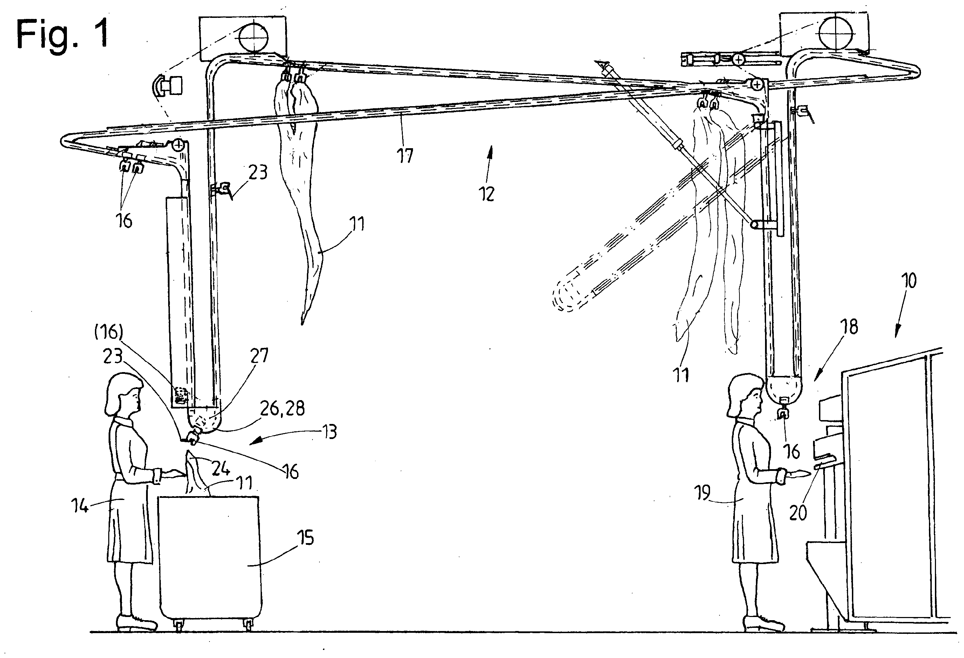

Die Fig. 1 zeigt schematisch eine Eingabemaschine 10 zum Zuführen von Wäschestücken 11 zu einer nicht dargestellten Mangel oder einer anderen Wäschebehandlungsmaschine und ein vor der Eingabemaschine 10 angeordnetes Transportsystem 12. Das Transportsystem 12 verfügt im gezeigten Ausführungsbeispiel über eine Beladestelle 13. Das Transportsystem 12 kann aber auch mehrere benachbarte Beladestellen 13 aufweisen. An der Beladestelle 13 befindet sich eine Bedienungsperson 14, die beispielsweise aus einem in einem Wäschewagen 15 sich befindenden Vorrat mehrerer Wäschestücke 11 jeweils ein einzelnes Wäschestück 11 entnimmt und es in Klammern 16 des Transportsystems 12 manuell eingibt.

Das Transportsystem 12 verfügt über eine umlaufende Transportschiene 17 oder gegebenenfalls auch mehrere Transportschienen 17. In der Transportschiene 17 läuft eine nicht gezeigte Förderkette und ein sonstiger Förderstrang um, der die an in der Transportschiene 17 verfahrbaren Laufwagen angeordneten Klammern 16 an der Transportschiene 17 entlangtransportiert, und zwar von der Beladestelle 13 zu einer Entladestelle 18 vor der Eingabemaschine 10. An der Entladestelle 18 wird im gezeigten Ausführungsbeispiel durch eine weitere Bedienungsperson 19 das Wäschestück 10 in als Spreizklammern ausgebildete Klammern 20 der Eingabemaschine 10 manuell eingegeben. Es ist auch denkbar, die Wäschestücke 10 an der Entladestelle 18 automatisch von den längs der Transportschiene 17 des Transportsystems 12 transportierten Klammern 16 in die Klammern 20 der Eingabemaschine 10 zu übergeben.

Jede der gleich ausgebildeten Klammern 16 des Transportsystems 12 verfügt über einen Klammerkörper 21 mit einem nach schräg unten offenen Klammermaul 22. Dem Klammermaul 22 der Klammer 16 ist ein federvorgespannter Klemmhebel 23 zugeordnet, der nach dem manuellen Einschieben eines Abschnitts des Wäschestücks 10 in das Klammermaul 22 infolge seiner Federvorspannung den Abschnitt des Wäschestücks 11 im Klammermaul 22 der Klammer 16 festklemmt.

Im gezeigten Ausführungsbeispiel wird jedes Wäschestück 11 mit benachbarten Eckbereichen 24 einer Kante, insbesondere einer Vorderkante, in aufeinanderfolgende Klammern 16 des Transportsystems 12 eingegeben bzw. eingehängt. Damit das Wäschestück 11 von den als Spreizklammern dienenden Klammern 20 der Eingabemaschine 10 ausgestreckt werden kann, müssen die gegenüberliegenden Eckbereich 24 jedes Wäschestücks 11 von der Bedienungsperson 14 unterschiedlich orientiert in das jeweilige Paar aufeinanderfolgender Klammern 16 eingehängt werden. Das muss so geschehen, dass der an der Vorderkante angrenzende Querrand eines Eckbereichs 24 des Wäschestücks 11 zur einen Seite der Kammer 16 des anderen, gegenüberliegenden Eckbereichs 24 der Vorderkante des Wäschestücks 11 zur entgegengesetzten Seite der nachfolgenden Kammer 16 weist. Finden hier Verwechslungen statt, kann das Wäschestück 11 von den als Spreizklammern dienenden Klammern 20 der Eingabemaschine 10 nicht ordnungsgemäß ausgebreitet werden, weil dann ein Eckbereich 24 umgeschlagen oder umgeklappt wäre. Deshalb ist es zwingend erforderlich, dass die gegenüberliegenden Eckbereiche 24 des jeweiligen Wäschestücks 10 in der richtigen Orientierung von der Bedienungsperson 14 in die aufeinanderfolgenden Klammern 16 eingehängt werden.

Die Erfindung sieht es vor, den Klammern 16 Leuchtmittel 25 zuzuordnen. Mindestens ist jeder Klammer 16 ein Leuchtmittel 25 zugeordnet. Das jeweilige Leuchtmittel 25 kann entweder direkt der jeweiligen Klammer 16 zugeordnet sein oder sich in der Nähe der jeweiligen Klammer 16 befinden.

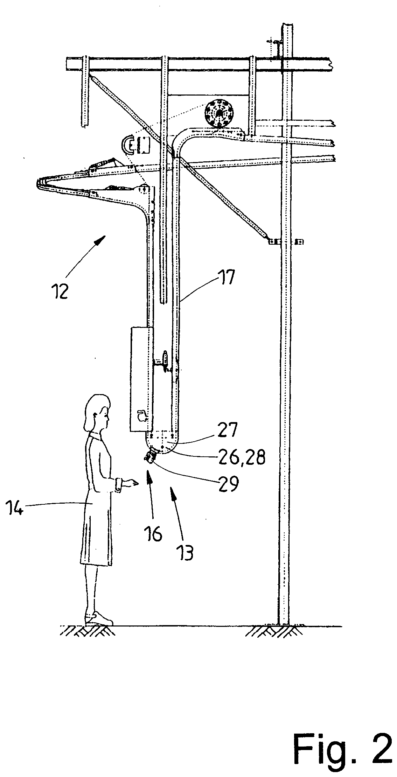

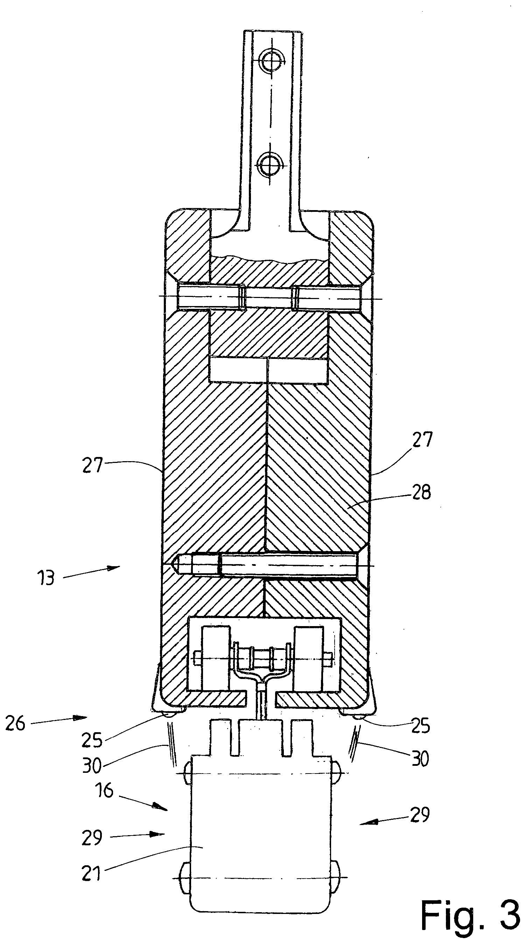

Beim Ausführungsbeispiel der Fig. 1 bis 3 sind zwei vorzugsweise gleiche Leuchtmittel 25 am Transportsystem 12 angeordnet, und zwar einem unteren, U-förmigen Umlenkbereich 26 der jeweiligen Klammer 16 an der Beladestelle 13. Das ist in der Fig. 3 dargestellt. Die beiden Leuchtmittel 25 befinden sich an der tiefsten Stelle oder nahe der tiefsten Stelle des Umlenkbereichs 26 an gegenüberliegenden halbkreisförmigen Seiten 27 eines Gehäuses 28 zur Bildung einer Führungsbahn für die Laufwagen der Klammern 16 im Umlenkbereich 26. Dadurch sind die Leuchtmittel 25 jeweils derjenigen Klammer 16 vorzugsweise indirekt zugeordnet, die sich momentan im Umlenkbereich 26 befindet und dort zum Eingeben eines Eckbereich 24 des Wäschestücks 11 kurzzeitig angehalten wird. Diese Zuordnung der Leuchtmittel 25 zu Klammern 16 hat den Vorteil der einfachen Stromversorgung der Leuchtmittel 25. Es braucht dann nicht - obwohl es auch im Rahmen der Erfindung denkbar wäre - jeder Klammer 16 eine eigene Energieversorgung oder Batterie zum Betrieb der Leuchtmittel 25 zugeordnet zu sein.

Die Leuchtmittel 25 dienen vorrangig und gegebenenfalls nur zur Beleuchtung der Klammern 16 zumindest an der Beladestelle 13, und zwar insbesondere dort im Umlenkbereich 26 der Klammern 16, wo diese kurzzeitig zum Eingeben eines Eckbereichs 24 des Wäschestücks 11 in die Beladeklammer 16 angehalten bzw. gestoppt werden. Es hat sich gezeigt, dass durch die Beleuchtung der Klammern 16 zumindest an der Beladestelle 13 die Beladeleistung der Bedienungsperson 14 gesteigert wird.

Im gezeigten Ausführungsbeispiel dienen die beiden Leuchtmittel 25 auch dazu, wechselweise eine Seite 29 der aufeinanderfolgenden Klammern 16 für benachbarte Eckbereich 24 der Vorderkante eines Wäschestücks 11 zu beleuchten und so optisch zu markieren. Dadurch bekommt die Bedienungsperson 14 angezeigt, mit welcher Orientierung, nämlich wie herum, sie die Eckbereiche 24 des jeweiligen Wäschestücks 11 in die aufeinanderfolgenden Klammern 16 einzuhängen hat.

Beispielsweise kann das so geschehen, dass jeweils diejenige am Eckbereich 24 der Vorderkante angrenzende Querkante des Wäschestücks 11 zu derjenigen Seite 29 der Klammer 16 weisen muss, die momentan vom Leuchtmittel 25 beleuchtet wird. Das gegenüberliegende Leuchtmittel 25 ist dann deaktiviert, strahlt nämlich kein Licht ab.

Zur Unterstützung der Orientierung der Bedienungsperson 14 kann es vorgesehen sein, dass die Leuchtmittel 25 an gegenüberliegenden Seiten 27 des Gehäuses 28 im Umlenkbereich 26 oder an gegenüberliegenden Seiten 29 der jeweiligen Klammer 16 Licht unterschiedlicher Farbe ausstrahlen, beispielsweise grünes Licht auf einer Seite und rotes Licht auf der anderen, gegenüberliegenden Seite. Alternativ oder zusätzlich ist es denkbar, dass die Leuchtmittel 25 an entgegengesetzten Seiten 27 des Umlenkbereichs 26 oder unterschiedlichen Seiten 29 der jeweiligen Klammer 16 unterschiedlich gepulste Lichtsignale abgeben, indem beispielsweise auf verschiedenen Seiten 27 bzw. 29 die Pausen zwischen aufeinanderfolgenden Leuchtphasen der Leuchtmittel 25 unterschiedlich lang sind.

Die Leuchtmittel 25 werden immer nur dann aktiviert, wenn eine Klammer 16 die Beladestelle 13 erreicht hat und dort stillsteht, also die Klammer 16 bereit ist zur Aufnahme eines Eckbereichs 24 eines Wäschestücks 11. Die Leuchtmittel, insbesondere das Leuchtmittel 25, das der Bedienungsperson 14 anzeigen soll, mit welcher Orientierung der betreffende Eckbereich 24 des Wäschestücks 10 in die momentan sich in der Übernahmeposition an der Beladestelle 13 befindliche Klammer 16 einzugeben ist, leuchtet dann die betreffende Seite 29 der Klammer 16 an, während das gegenüberliegende Leuchtmittel 25 nicht aktiviert ist, also kein Licht abstrahlt oder kein Lichtsignal abgibt.

Die Leuchtmittel 25 können verschiedenartige Lichtstrahlen abgeben, und zwar diffuse, gebündelte und/oder fokussierte Lichtstrahlen. Im gezeigten Ausführungsbeispiel geben die Leuchtmittel 25 einen im Wesentlichen gebündelten Lichtstrahl 30 mit gleichem oder nahezu gleichem Querschnitt über seine Länge ab. Solche Lichtstrahlen 30 eignen sich besonders vorteilhaft zu visuellen Anzeige- und Beleuchtungszwecken und geben dadurch der Bedienungsperson 14 eine eindeutige Orientierungshilfe, insbesondere hinsichtlich der Richtung zum Einschieben des jeweiligen Eckbereichs 24 des Wäschestücks 11 in das Klammermaul 22 der Klammer 16.

Die Leuchtmittel 25 des zuvor beschriebenen Ausführungsbeispiels der Erfindung sind bevorzugt gebildet von Leuchtdioden (LED's) oder Laser, und zwar vor allem schwache Markierungslaser, die aufgrund ihrer Energiedichte keine schädigenden Einflüsse auf die Augen der Bedienungsperson ausüben. Als Leuchtdioden ausgebildete Leuchtmittel 25 zeichnen sich durch einen geringen Energieverbrauch aus, so dass sie über eine lange Zeit hinweg mit einer Batterie betrieben werden können. Gleiches gilt für Markierungslaser geringer Energiedichte. Es ist aber auch denkbar, die Leuchtmittel 25 durch konventionelle Glühbirnen, vorzugsweise solche mit geringer Leistung, die zu Signal-, Markierungs- und/oder auch Orientierungszwecken ausreichen, zu bilden.

Denkbar ist es auch, die Leuchtmittel 25 so auszubilden oder ihnen Linsen zuzuordnen, dass sie einen Lichtstrahl 30 gewünschter Gestalt erzeugen. Bevorzugt sind gebündelte oder fokussierte Lichtstrahlen 30. Diese eignen sich besonders, wenn die Leuchtmittel 25 nur oder auch dazu dienen sollen, einer jeweiligen Bedienungsperson Orientierungshilfen zu geben, aber nicht vorrangig zu Beleuchtungszwecken dienen sollen. Andererseits können auch Leuchtmittel 25 mit diffusen Lichtstrahlen vorgesehen sein, wenn die Leuchtmittel 25 nur oder vorwiegend zu Beleuchtungszwecken dienen sollen.

### Bezugszeichenliste:

- 10: Eingabemaschine
- 11: Wäschestück
- 12: Transportsystem
- 13: Beladestelle
- 14: Bedienungsperson
- 15: Wäschewagen
- 16: Klammer
- 17: Transportschiene
- 18: Entladestelle
- 19: Bedienungsperson
- 20: Klammer
- 21: Klammerkörper
- 22: Klammermaul
- 23: Klemmhebel
- 24: Eckbereich
- 25: Leuchtmittel
- 26: Umlenkbereich
- 27: Seite
- 28: Gehäuse
- 29: Seite
- 30: Lichtstrahl

## Patentansprüche

1. Verfahren zum Einhängen von Wäschestücken (11) in Klammern (16) von eine Beladestelle (13) oder mehrere benachbarte Beladestellen (13) aufweisenden Transportsystemen in Wäschereien oder Wäschereimaschinen, wobei von mindestens einer Bedienungsperson (14, 19) an der oder der jeweiligen Beladestelle (13) ein Abschnitt des jeweiligen Wäschestücks (11) in die jeweilige Klammer (16) eingegeben wird, **dadurch gekennzeichnet, dass** durch mindestens ein der jeweiligen Klammer (16) indirekt in ihrer Nähe und ortsfest zugeordnetes Leuchtmittel (25) der Bedienungsperson (14, 19) eine Orientierung zum Einhängen des betreffenden Wäschestücks (11) in die Klammer (16) gegeben bzw. vorgegeben wird, von dem mindestens einen Leuchtmittel (25) die jeweilige Klammer (16) erhellt wird und der jeweiligen Bedienungsperson (14, 19) angezeigt wird, in welcher Richtung der betreffende Abschnitt des jeweiligen Wäschestücks (11) in ein Klammermaul (22) der betreffenden Klammer (16) eingeschoben werden muss, und dass der jeweiligen Klammer (18) mehrere Leuchtmittel (25) zugeordnet sind, wobei durch Aktivierung ausgesuchter Leuchtmittel (25) nur ein oder einige Leuchtmittel (25) Licht erzeugen, wodurch der Bedienungsperson (14, 19) visuell dargestellt wird, in welcher Richtung oder wo sie das Wäschestück (11) in die Klammer (16) einzuschieben hat.

2. Verfahren nach Anspruch 1, **dadurch gekennzeichnet, dass** von den der jeweiligen Klammer (16) zugeordneten Leuchtmitteln (25) der Bereich eines Klammermauls (22) der jeweiligen Klammer (16) erhellt wird und/oder durch die Anordnung, Ausrichtung, Lichtfarbe und/oder Taktung der den Klammern (16) zugeordneten Leuchtmittel (25) erzeugten Lichts und/oder Lichtstrahls (30) der Bedienungsperson (14, 19) wenigstens eine Orientierung, insbesondere eine zusätzliche Orientierung, zur Verfügung gestellt und/ oder vorgegeben wird.

3. Verfahren nach Anspruch 1 oder 2, **dadurch gekennzeichnet, dass** von den Leuchtmitteln (25) die jeweilige Klammer (16), insbesondere ihr Klammermaul (22), erhellt wird und der jeweiligen Bedienungsperson (14, 19) angezeigt wird, in welche Klammer (16) der Abschnitt des jeweiligen Wäschestücks (11) einzuschieben ist.

4. Verfahren nach Anspruch 1 oder 2, **dadurch gekennzeichnet, dass** von den Leuchtmitteln (25) die jeweilige Klammer (16), insbesondere ihr Klammermaul (22), erhellt wird und der jeweiligen Bedienungsperson (14, 19) angezeigt wird, in welcher Orientierung der Abschnitt des jeweiligen Wäschestücks (11) in das Klammermaul (22) der betreffenden Klammer (16) einzuschieben ist.

5. Verfahren nach einem der vorhergehenden Ansprüche, **dadurch gekennzeichnet, dass** die Leuchtmittel (25) zur Erzeugung eines gerichteten und/oder gebündelten und/oder fokussierten Lichtstrahls (30) ausgebildet sind, vorzugsweise der Lichtstrahl (30) derart gerichtet ist, dass er der Bedienungsperson (14, 19) die Einschubrichtung eines Abschnitts des Wäschestücks (11) in das Klammermaul (22) visualisiert.

6. Verfahren nach Anspruch 1, **dadurch gekennzeichnet, dass** die Leuchtmittel (25) zur Abgabe von Lichtsignalen ausgebildet sind und derart dem Klammerkörper (21) indirekt zugeordnet sind, dass sie das Klammermaul (22), vorzugsweise ein offenes Ende desselben, markieren und/oder erhellen.

7. Verfahren nach einem der vorhergehenden Ansprüche, **dadurch gekennzeichnet, dass** von den Leuchtmitteln (25) bewegte Lichtstrahlen (30) und/oder Lichtstrahlen (30) wechselnder Richtungen erzeugbar sind und/oder die Leuchtmittel (25) derart bewegbar sind, dass sie bewegte Lichtstrahlen (30) bzw. Lichtstrahlen (30) wechselnder Richtungen erzeugen.

8. Verfahren nach Anspruch 1, **dadurch gekennzeichnet, dass** die Leuchtmittel (25) die Klammern (16) an der Beladestelle (13) bei kurzzeitig zum Eingeben eines Eckbereichs (24) des jeweiligen Wäschestücks (11) in die jeweilige Klammer (16) gestoppter Klammer (16) beleuchten.

9. Verfahren nach einem der Ansprüche 1 bis 6, **dadurch gekennzeichnet, dass** der jeweilige Lichtstrahl (30) von als Leuchtdiode (LED) oder Laser, insbesondere Markierungslaser mit geringer Energiedichte, ausgebildeten Leuchtmitteln (25) erzeugt wird.

## Claims

1. Method for hanging garments (11) into clips (16) of transport systems having a loading point (13) or a plurality of adjacent loading points (13) in laundrettes or laundrette machines, wherein a portion of the respective garment (11) is placed into the respective clip (16) by at least one operator (14, 19) at the, or at the respective, loading point (13), **characterized in that** an orientation for hanging the relevant garment (11) into the clip (16) is given to or specified for the operator (14, 19) by way of at least one light-emitting means (25) that is assigned to the respective clip (16) indirectly in the vicinity thereof and at a fixed location, the respective clip (16) is lit by the at least one light-emitting means (25), and the direction in which the particular portion of the respective garment (11) should be inserted into a clip jaw (22) of the particular clip (16) is indicated to the respective operator (14, 19), and **in that** a plurality of light-emitting means (25) are assigned to the respective clip (18), wherein by activation of selected light-emitting means (25) only one or some light-emitting means (25) generate light, as a result of which the direction in which or where the garment (11) should be inserted by the operator (14, 19) into the clip (16) is visually presented to the operator (14, 19).

2. Method according to Claim 1, **characterized in that** the region of a clip jaw (22) of the respective clip (16) is lit by the light-emitting means (25) assigned to the respective clip (16), and/or at least one orientation, in particular an additional orientation, is made available to and/or specified for the operator (14, 19) by the arrangement, alignment, light colour and/or clocking of the light and/or light beam (30) generated the light-emitting means (25) assigned to the clips (16).

3. Method according to Claim 1 or 2, **characterized in that** the respective clip (16), in particular the clip jaw (22) thereof, is lit by the light-emitting means (25), and the clip (16) into which the portion of the respective garment (11) should be inserted is indicated to the respective operator (14, 19).

4. Method according to Claim 1 or 2, **characterized in that** the respective clip (16), in particular the clip jaw (22) thereof, is lit by the light-emitting means (25), and the orientation in which the portion of the respective garment (11) should be inserted into the clip jaw (22) of the particular clip (16) is indicated to the respective operator (14, 19).

5. Method according to one of the preceding claims, **characterized in that** the light-emitting means (25) are embodied for producing a directed and/or collimated and/or focused light beam (30), preferably the light beam (30) is directed such that it visualizes the insertion direction of a portion of the garment (11) into the clip jaw (22) for the operator (14, 19).

6. Method according to Claim 1, **characterized in that** the light-emitting means (25) are embodied for emitting light signals and are indirectly assigned to the clip body (21) such that they mark and/or light the clip jaw (22), preferably an open end thereof.

7. Method according to one of the preceding claims, **characterized in that** moving light beams (30) and/or light beams (30) of changing directions are producible by the light-emitting means (25) and/or the light-emitting means (25) are movable such that they produce moving light beams (30) or light beams (30) of changing directions.

8. Method according to Claim 1, **characterized in that** the light-emitting means (25) illuminate the clips (16) at the loading point (13) when a clip (16) is stopped for a short time for placing a corner region (24) of the respective garment (11) into the respective clip (16).

9. Method according to one of Claims 1 to 6, **characterized in that** the respective light beam (30) is produced by light-emitting means (25) that are embodied in the form of a light-emitting diode (LED) or laser, in particular a marking laser with a low energy density.

## Revendications

1. Procédé permettant d'accrocher des pièces de linge (11) à des pinces (16) de systèmes de transport présentant un poste de chargement (13) ou plusieurs postes de chargement voisins (13) dans des blanchisseries ou des machines de blanchisserie, au moins un opérateur (14, 19) audit ou à chaque poste de chargement (13) entrant une partie de la pièce de linge (11) respective dans la pince (16) respective,
**caractérisé en ce que** qu'au moins un moyen d'éclairage (25), associé à la pince (16) respective de manière stationnaire et à proximité de celle-ci, fournit ou spécifie à l'opérateur (14, 19) une orientation pour accrocher la pièce de linge (11) en question à la pince (16), ledit au moins un moyen d'éclairage (25) éclaire la pince (16) respective et indique à l'opérateur (14, 19) respectif dans quelle direction la partie en question de la pièce de linge (11) respective est à insérer dans une mâchoire de pince (22) de la pince (16) en question, et **en ce que** la pince (18) respective est associée à plusieurs moyens d'éclairage (25), dans lequel, en activant des moyens d'éclairage (25) choisis, uniquement un seul ou certains moyens d'éclairage (25) produisent de la lumière de façon à représenter visuellement pour l'opérateur (14, 19) dans quelle direction ou à quel endroit il doit insérer la pièce de linge (11) dans la pince (16).

2. Procédé selon la revendication 1, **caractérisé en ce que** les moyens d'éclairage (25) associés à la pince (16) respective éclairent la zone d'une mâchoire de pince (22) de la pince (16) respective, et/ou au moins une orientation, en particulier une orientation supplémentaire, est fournie et/ou spécifiée à l'opérateur (14, 19) par la disposition, l'orientation, la couleur de lumière et/ou le cadencement de la lumière produite et/ou faisceau lumineux (30) produit les moyens d'éclairage (25) associés aux pinces (16) .

3. Procédé selon la revendication 1 ou 2, **caractérisé en ce que** les moyens d'éclairage (25) éclairent la pince (16) respective, en particulier sa mâchoire de pince (22), et indiquent à l'opérateur (14, 19) respectif dans quelle pince (16) la partie de la pièce de linge (11) respective doit être insérée.

4. Procédé selon la revendication 1 ou 2, **caractérisé en ce que** les moyens d'éclairage (25) éclairent la pince (16) respective, en particulier sa mâchoire de pince (22), et indiquent à l'opérateur (14, 19) respectif dans quelle orientation la partie de la pièce à linge (11) respective doit être insérée dans la mâchoire de pince (22) de la pince (16) en question.

5. Procédé selon l'une quelconque des revendications précédentes, **caractérisé en ce que** les moyens d'éclairage (25) sont réalisés pour produire un faisceau lumineux (30) dirigé et/ou concentré et/ou focalisé, le faisceau lumineux (30) étant de préférence dirigé de telle sorte qu'il montre à l'opérateur (14, 19) la direction d'insertion d'une partie de la pièce de linge (11) dans la mâchoire de pince (22).

6. Procédé selon la revendication 1, **caractérisé en ce que** les moyens d'éclairage (25) sont réalisés pour sortir des signaux lumineux et sont associés indirectement au corps de pince (21) de façon à marquer et/ou éclairer la mâchoire de pince (22), de préférence une extrémité ouverte de celle-ci.

7. Procédé selon l'une quelconque des revendications précédentes, **caractérisé en ce que** les moyens d'éclairage (25) peuvent produire des faisceaux lumineux (30) animés et/ou des faisceaux lumineux (30) de directions variables, et/ou les moyens d'éclairage (25) peuvent être déplacés de façon à produire des faisceaux lumineux (30) animés ou des faisceaux lumineux (30) de directions variables.

8. Procédé selon la revendication 1, **caractérisé en ce que** les moyens d'éclairage (25) éclairent les pinces (16) au poste de chargement (13) lorsque la pince (16) est arrêtée brièvement pour l'entrée d'un coin (24) de la pièce de linge (11) respective dans la pince (16) respective.

9. Procédé selon l'une quelconque des revendications 1 à 6, **caractérisé en ce que** le faisceau lumineux (30) respectif est produit par des moyens d'éclairage (25) réalisés sous la forme d'une diode électroluminescente (DEL) ou d'un laser, en particulier d'un laser de marquage de faible densité énergétique.
